# DEMANDE DE BREVET EUROPEEN

(11) **EP 1 925 756 A1**
(43) Date de publication de la demande: **28.05.2008**
(21) Numéro de dépôt: 07291359.3
(22) Date de dépôt: 13.11.2007
(51) Int. Cl.: E03F 5/02, F16L 27/04

(54) **Regard d'inspection pour réseau de canalisations, comprenant au moins un manchon de raccordement renfermant un élément de liaison pivotant**

(30) Priorité: 23.11.2006 FR 0610276
(71) Demandeur: WAVIN B.V., 8011 CW Zwolle (NL)
(72) Inventeur: Gander, Christian, 03200 Le Vernet (FR)
(74) Mandataire: Chameroy, Claude

(57) **Abrégé**

La présente invention se rapporte à un regard d'inspection (10) pour un réseau de canalisations de transport de fluide, comportant un fût (11) muni d'une ouverture d'inspection (13) en partie supérieure et d'au moins un manchon latéral de raccordement (20) comportant une surface intérieure (21) de forme générale sphérique et renfermant un élément interne articulé (30) apte à être raccordé à une canalisation (2), ledit élément interne (30) comportant une surface extérieure (31) complémentaire de la surface intérieure (21) du manchon latéral (20) de manière à former une rotule de liaison, caractérisé en ce que le manchon latéral (20) est muni de moyens internes (40) pour limiter l'angle de pivotement (α) de l'élément interne (30).

## Description

La présente invention concerne un regard d'inspection pour réseau de canalisations de transport de fluide comprenant un fût équipé d'au moins un manchon de raccordement d'une canalisation.

Il existe déjà sur le marché différents types de regards d'inspection pour réseau de canalisations de transport de fluide, tel que de l'eau usée, de l'eau potable ou de l'eau de ruissellement.

Ces regards comprennent typiquement un corps vertical tubulaire en forme de fût comportant une ouverture d'inspection en partie supérieure et au moins un manchon latéral pour le raccordement d'une canalisation de transport de fluide. Le fût est enterré, de même que la canalisation et le manchon. Seule l'ouverture du fût et affleure le sol pour permettre une inspection visuelle et/ou humaine du fond du regard.

Afin de permettre un positionnement plus aisé de la canalisation par rapport au manchon, il a été proposé d'associer la canalisation à un élément articulé interne au manchon permettant de former une liaison de type rotule. Un tel regard équipé avec ce type d'organe de liaison est décrit notamment dans le brevet EP-B-1-141-495.

Cependant, ce système de raccordement ne donne pas entièrement satisfaction car il subsiste encore un risque élevé que la canalisation rompe ou se plie au contact de l'embouchure du manchon lors d'un mouvement de pivotement trop important de la canalisation. Ces risques de cassure sont d'autant plus importants que les canalisations sont enterrées et sont soumises à des contraintes élevées dans la terre, notamment en cas de travaux à proximité avec des engins de chantier tels qu'une pelleteuse ou un rouleau compresseur. En cas de rupture, les dégâts peuvent ainsi être difficiles à détecter et à réparer car la fuite induite par la rupture locale de la canalisation et/ou par la fissuration du manchon peut être faible. Dans d'autres cas, la fuite peut être considérable et engendrer des frais très élevés de réparation qui s'ajoutent à la perte éventuelle d'eau potable ou à la pollution locale de la terre si le fluide transporté est écologiquement dangereux.

Un but de la présente invention est donc de résoudre les problèmes cités précédemment à l'aide d'une solution simple à mettre en oeuvre, fiable et peu coûteuse.

Pour cela, l'invention propose de modifier la structure interne du regard au niveau de la liaison rotule avec la canalisation.

Plus précisément, la présente invention a pour objet un regard d'inspection pour un réseau de canalisations de transport de fluide, comportant un fût muni d'une ouverture d'inspection en partie supérieure et d'au moins un manchon latéral de raccordement comportant une surface intérieure de forme générale sphérique et renfermant un élément interne articulé apte à être raccordé à une canalisation, ledit élément interne comportant une surface extérieure complémentaire de la surface intérieure du manchon latéral de manière à former une rotule de liaison, caractérisé en ce que le manchon latéral est muni de moyens internes pour limiter l'angle de pivotement de l'élément interne.

Selon des modes de réalisation préférés de la présente invention :
- les moyens internes de limitation de pivotement comprennent une surface de butée ménagée à l'extrémité de la surface intérieure sphérique opposée à l'extrémité libre du manchon, ladite surface de butée étant destinée à coopérer avec une surface d'appui de l'élément interne ;
- la surface de butée est constituée par un épaulement annulaire faisant saillie radialement à l'intérieur du manchon et tourné vers l'extrémité libre de ce dernier, et la surface d'appui étant constituée par le bord périphérique de l'extrémité adjacente de l'élément interne ;
- l'élément interne est maintenu axialement à l'intérieur du manchon à l'aide d'une bague montée de manière amovible à l'extrémité libre (20a) de ce dernier ;
- la bague est montée sur le manchon par une liaison baïonnette ;
- le bord libre du la bague constitue également une butée contre laquelle la canalisation prend appui lorsque celle-ci est inclinée dans une position de pivotement extrême et lorsque l'angle de pivotement de l'élément interne est limité par les moyens internes du manchon latéral ;
- au moins un joint d'étanchéité est monté à l'extérieur de l'élément interne, dans un logement prévu à cet effet, de manière à former une liaison étanche au fluide avec la surface intérieure du manchon ;
- un joint élastique annulaire est monté à l'intérieur de l'élément interne pour recevoir la canalisation de manière étanche au fluide ;
- le joint annulaire est muni d'une lèvre élastique déformable radialement et présentant une forme tronconique dont le plus petit diamètre est inférieur au diamètre externe de la canalisation ; et
- l'élément interne est adapté pour pivoter sur un axe quelconque perpendiculaire à l'axe de révolution du manchon, son angle de pivotement étant limité à environ ± 10° de part et d'autre de cet axe de révolution.

L'invention va maintenant être décrite plus en détail en référence à des modes de réalisation particuliers donnés à titre d'illustration uniquement et représentés sur les figures annexées dans lesquelles :
- la figure 1 est une vue en perspective d'un regard d'inspection conforme à la présente invention,
- la figure 2 est une vue en perspective éclatée et partiellement en coupe du regard de la figure 1 ;
- la figure 3 est une vue en coupe partielle éclatée du regard de la figure 2 ;
- la figure 4 est une vue de côté du regard de la figure 1 ;
- la figure 5 est une vue de dessus du regard de la figure 1 ;
- la figure 6 est une vue de dessous du regard de la figure 1 ;
- la figure 7 est une vue de face du regard de la figure 1 ; et
- la figure 8 est une vue de détail en coupe de la figure 4.

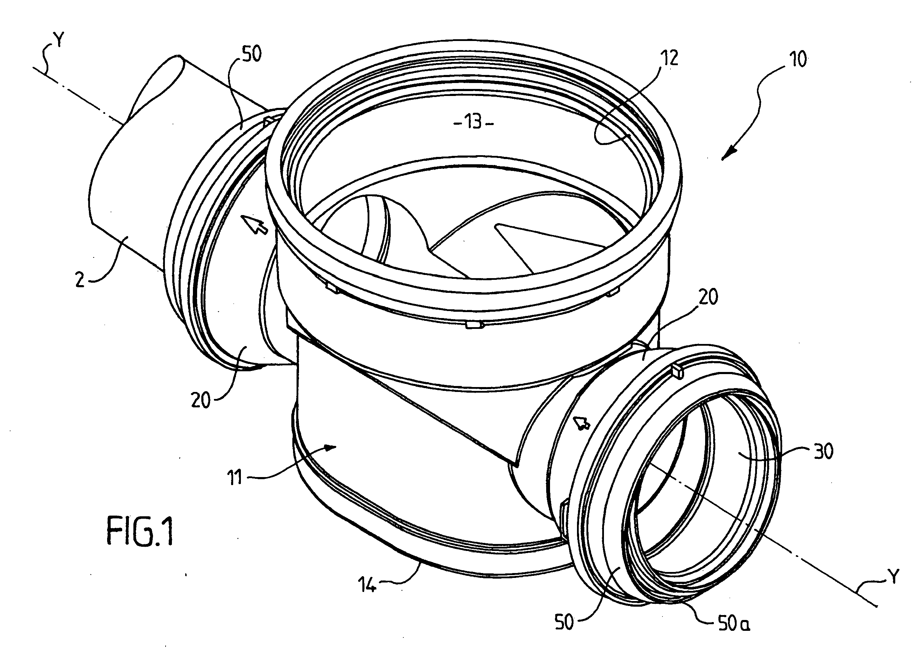

Les figures 1 à 3 sont des représentations en perspective, en perspective éclatée et en coupe éclatée d'un regard d'inspection 10 conforme à la présente invention.

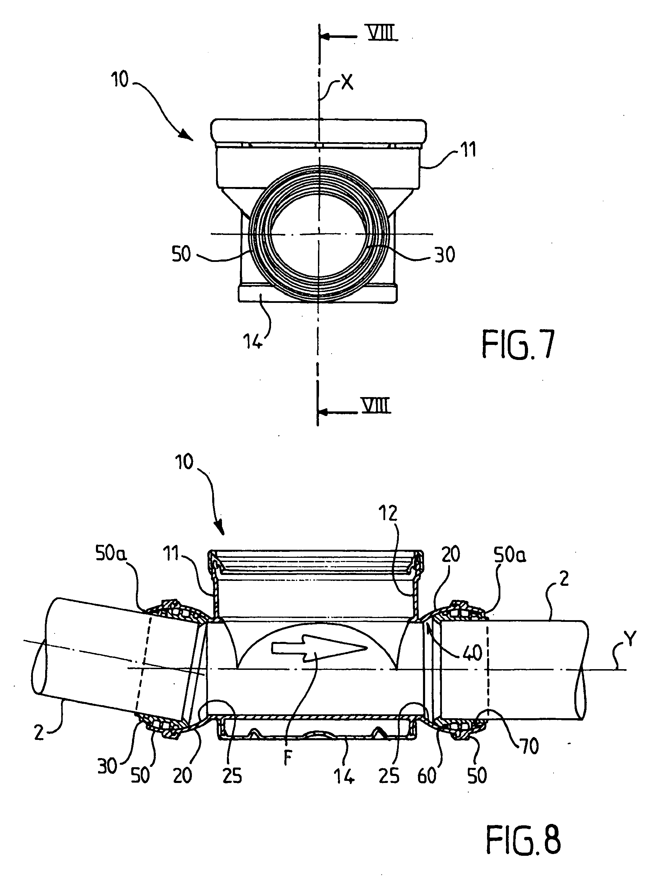

Le regard d'inspection 10 est réalisé par exemple en matière plastique moulée telle que du PVC ou du polyéthylène. Il comprend principalement un fût 11 présentant une paroi cylindrique 12 d'axe vertical de révolution X (voir figure 7), une ouverture d'inspection 13 en partie supérieure, un fond 14 en partie inférieure et deux manchons latéraux de raccordement 20 formant chacune la partie femelle d'une liaison étanche avec une canalisation 2.

Ce type de regard d'inspection 10 est utilisé dans des réseaux de canalisations de transport de fluide, par exemple de transport d'eau courante, d'eau de ruissellement ou d'eau usée. Il est typiquement enfoui dans le sol (route, trottoir, terre) et seule l'ouverture d'inspection 13 affleure le niveau du sol et pourvue d'un couvercle permettant, si besoin, à l'eau de ruisseler vers le fond 14. L'utilité d'un tel regard 10 est de permettre à un homme d'en inspecter le fond 14 et les manchons 20, par exemple pour constater si le fût 11 est obturé ou sur le point de se boucher par entassement de matière telle que des feuilles ou des débris divers.

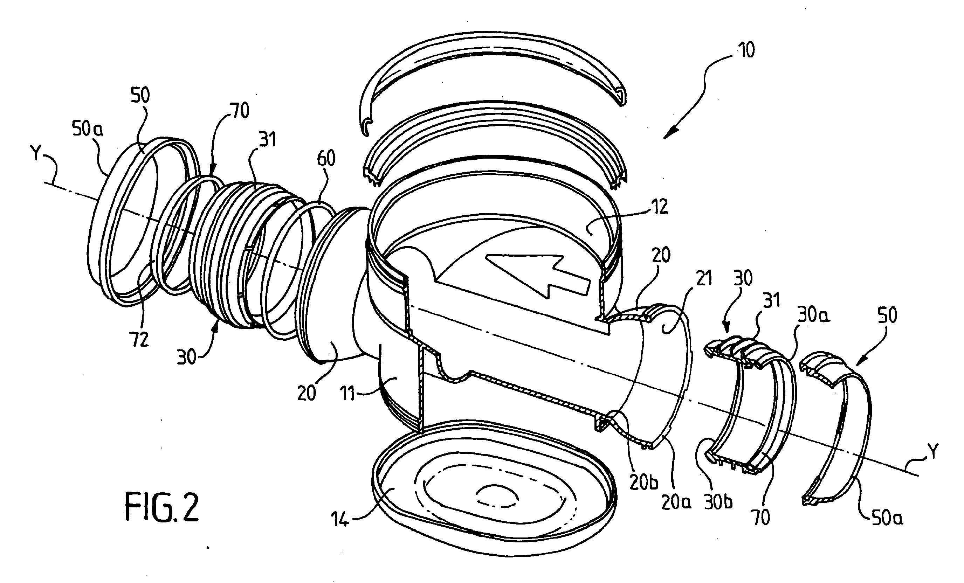

Chaque manchon latéral 20 fait saillie extérieurement de la paroi cylindrique 12 du fût 11, sensiblement perpendiculairement à l'axe longitudinal de symétrie X dudit fût. Une légère inclinaison continue d'un manchon à l'autre est envisageable pour faciliter le transport du fluide dans la direction d'écoulement matérialisée par la flèche F (figures 2, 3, 5 et 8).

Comme cela est visible notamment sur les figures 2, 3 et 8, chaque manchon latéral 20 présente une surface intérieure 21 de forme générale hémisphérique. Chaque manchon 20 renferme un élément interne articulé 30 apte à être raccordé à une canalisation 2 de manière étanche au fluide circulant à l'intérieur de cette dernière.

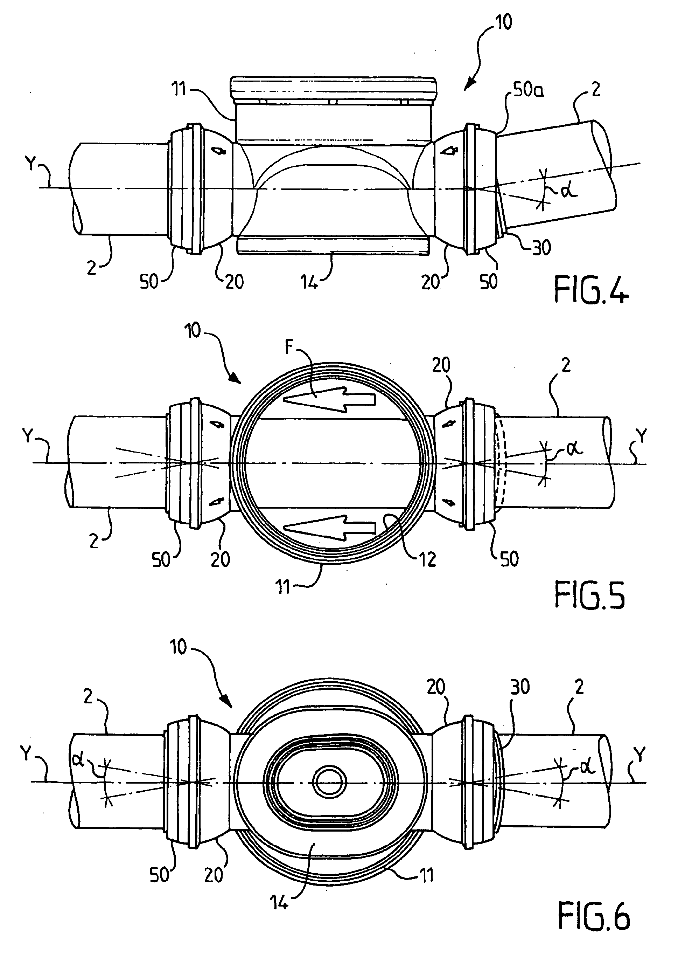

A cet effet, l'élément interne 30 présente une surface extérieure 31 complémentaire de la surface intérieure 21 du manchon de manière à former une liaison rotule, c'est-à-dire une surface formant une portion de sphère. Cette liaison rotule permet à la canalisation 2 de pivoter sur un axe quelconque perpendiculaire à l'axe de révolution Y du manchon selon un angle α, comme cela est représenté sur les figures 4 à 6 et 8. L'élément interne 30 peut également tourner sur son propre axe de révolution grâce à la liaison rotule. Le pivotement de l'élément interne 30 à l'intérieur du manchon 20 est limitée par des moyens internes de butée 40, comme cela est décrit ci-après.

A cet effet, un épaulement 22 disposé à une extrémité 20b de la surface intérieure sphérique 21 fait saillie radialement vers l'intérieur du manchon 20 pour former une surface de butée. Quant à l'élément interne 30, il présente, à un extrémité 30b, un bord annulaire formant une surface d'appui 32 destinée à coopérer avec l'épaulement 22 de la surface sphérique 21 du manchon 20 de manière à limiter le pivotement dudit élément interne 30 à l'intérieur du manchon latéral 20.

Ainsi, lorsque la canalisation 2 pivote grâce à la liaison rotule formée par la surface intérieure 21 du manchon 20 et la surface extérieure 31 de l'élément interne 30, son pivotement limité par la butée formée par l'épaulement 22 et la surface d'appui 32. Concrètement, dans l'exemple illustré, le pivotement ne peut pas dépasser ±10°, c'est-à-dire que l'angle maximal de pivotement a entre les deux positions extrêmes de la canalisation 2 est de 20°.

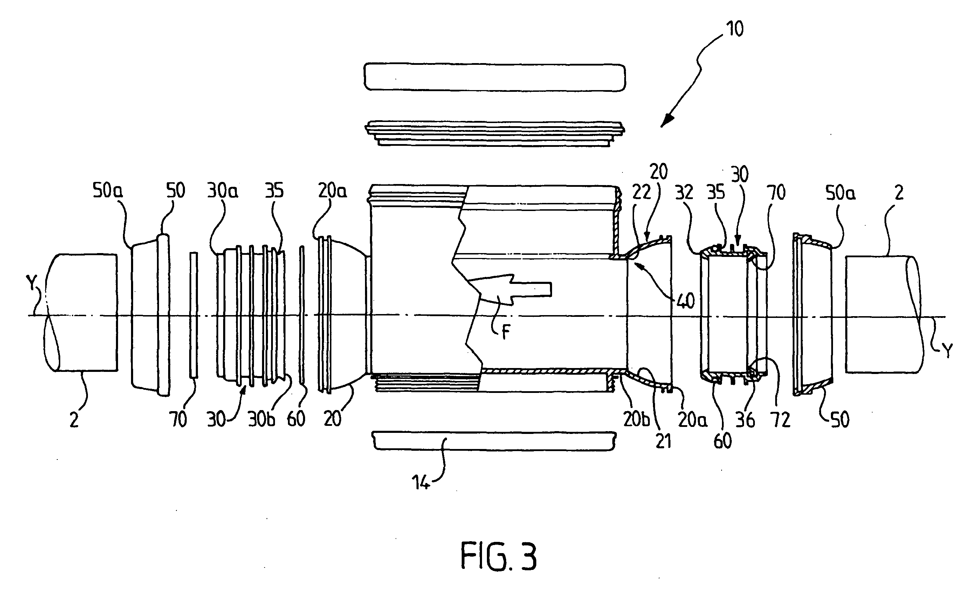

Comme cela est représenté sur les figures 2 et 3, l'élément interne 30 est maintenu en position axiale dans le manchon latéral 20 grâce à une bague périphérique 50 montée de manière amovible à l'extrémité libre 20a dudit manchon,. Plus précisément, la bague 50 est montée sur le manchon 20 par une liaison baïonnette.

Le bord périphérique libre 50a de la bague 50 peut constituer un second moyen de butée pour la canalisation 2. En pratique, lorsque la canalisation 2 est inclinée dans une position extrême telle que l'élément interne 30 est en butée, c'est-à-dire lorsque la surface d'appui 32 repose contre l'épaulement 22, ladite canalisation peut ainsi entrer en contact avec le bord libre 50a de la bague. La combinaison de ces deux moyens de butée permet ainsi d'éviter que la canalisation 2 plie ou se rompe au niveau du contact ponctuel avec le bord libre 50a de la bague 50.

L'élément interne 30 présente un logement externe annulaire 35 ménagé à proximité de sa surface d'appui 32 et de son extrémité 30b. Ce logement 35 est adapté pour recevoir un joint torique 60 permettant de former une liaison étanche au fluide avec la surface hémisphérique 21 du manchon 20, quelle que soit la position angulaire de l'élément interne 30 par rapport au manchon 20.

L'élément interne 30 présente également une gorge interne 36 disposée à proximité de son extrémité libre 30a et apte à recevoir un joint annulaire 70 permettant de créer une liaison étanche au fluide avec la canalisation 2. Avantageusement, le joint annulaire 70 est un joint présentant une lèvre élastique 72 déformable radialement pour lui permettre de s'adapter avec précision à la surface externe de la canalisation 2. Plus précisément, la lèvre 72 présente une forme conique présentant une partie ayant, au repos, un diamètre plus petit que le diamètre externe de la canalisation 2 qu'elle entoure. La partie de plus petit diamètre interne est la plus éloignée de l'extrémité libre 30a de l'élément interne 30.

Lorsque la canalisation 2 est inclinée vers le haut de quelques degrés, et dans la limite maximale des ±10° dont il a été question précédemment, une zone creuse 25 (voir figure 8) se forme en partie basse du manchon 20, proche de son extrémité 20b. Cette zone creuse 25 en forme de flaque crée un espace de rétention dans lequel des matières peuvent s'agglomérer et gêner, voire empêcher, le pivotement de la canalisation dans le sens inverse (i.e. vers le bas). Cet espace de rétention d'effluents plus ou moins solides peut également gêner le bon écoulement du fluide au sein du regard 10 ou d'une canalisation 2 à l'autre. Dans le regard 10 de la présente invention, cette zone creuse 25 est de plus faible dimension que dans l'art antérieur, grâce à la forme du manchon 20 et de l'élément interne 30, et de la position de ce dernier au sein dudit manchon. Ceci permet de réduire notablement le phénomène d'agglomération de matières cité précédemment.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, le fût peut présenter une forme de révolution autre que cylindrique à section ronde, par exemple à section ellipsoïdale.

Le regard peut être équipé d'un seul manchon latéral ou de plus de deux selon l'utilisation.

Par exemple il peut présenter une structure en Y quand on le regarde de dessus, avec deux canalisation d'arrivée de fluide et une canalisation de sortie à l'opposée.

## Revendications

1. Regard d'inspection (10) pour un réseau de canalisations de transport de fluide, comportant un fût (11) muni d'une ouverture d'inspection (13) en partie supérieure et d'au moins un manchon latéral de raccordement (20) présentant un axe de révolution (Y)) et renfermant un élément interne articulé (30) apte à être raccordé à une canalisation (2), ledit élément interne (30) comportant une surface extérieure (31) complémentaire de la surface intérieure (21) du manchon latéral (20), **caractérisé en ce que** le manchon latéral (20) comporte une surface intérieure (21) de forme générale sphérique coopérant avec la surface extérieure (31) de l'élément interne (30) pour former une rotule de liaison pouvant pivoter sur un axe quelconque perpendiculaire à l'axe de révolution (Y) du manchon (20), et **en ce que** le manchon latéral (20) est muni de moyens internes (40) pour limiter l'angle de pivotement (α) de l'élément interne (30).

2. Regard d'inspection selon la revendication 1, **caractérisé en ce que** les moyens internes de limitation de pivotement (40) comprennent une surface de butée (22) ménagée à l'extrémité (20b) de la surface intérieure sphérique (21) opposée à l'extrémité libre (20a) du manchon (20), ladite surface de butée (22) étant destinée à coopérer avec une surface d'appui (32) de l'élément interne (30).

3. Regard d'inspection selon la revendication 2, **caractérisé en ce que** la surface de butée est constituée par un épaulement annulaire (22) faisant saillie radialement à l'intérieur du manchon (20) et tourné vers l'extrémité libre (20a) de ce dernier, et **en ce que** la surface d'appui est constituée par le bord périphérique (32) de l'extrémité adjacente (30b) de l'élément interne (30).

4. Regard d'inspection selon l'une quelconque des revendications précédentes, **caractérisé en ce que** l'élément interne (30) est maintenu axialement à l'intérieur du manchon (20) à l'aide d'une bague (50) assemblée de manière non démontable à l'extrémité libre (20a) de ce dernier.

5. Regard d'inspection selon la revendication 4, **caractérisé en ce que** la bague (50) est assemblée au manchon (20) par une liaison de type baïonnette.

6. Regard d'inspection selon la revendication 4 ou 5, **caractérisé en ce que** le bord libre (50a) de la bague (50) constitue également une butée contre laquelle la canalisation (2) prend appui lorsque celle-ci est inclinée dans une position de pivotement extrême et lorsque l'angle de pivotement de l'élément interne (30) est limité par les moyens internes (40) du manchon latéral (20).

7. Regard d'inspection selon l'une quelconque des revendications précédentes, **caractérisé en ce qu'**au moins un joint d'étanchéité (60) est monté à l'extérieur de l'élément interne (30), dans un logement (35) prévu à cet effet, de manière à former une liaison étanche aux pressions interne et externe avec la surface intérieure (21) du manchon (20).

8. Regard d'inspection selon l'une quelconque des revendications précédentes, **caractérisé en ce qu'**un joint élastique annulaire (70) est monté à l'intérieur de l'élément interne (30) pour recevoir la canalisation (2) de manière étanche aux pressions interne et externe.

9. Regard d'inspection selon la revendication 8, **caractérisé en ce que** le joint annulaire (70) est muni d'une lèvre élastique (72) déformable radialement et présentant une forme tronconique dont le plus petit diamètre est inférieur au diamètre externe de la canalisation.

10. Regard d'inspection selon l'une quelconque des revendications précédentes, **caractérisé en ce que** l'angle de pivotement α de l'élément interne (30) est limité à environ ± 10° de part et d'autre de son axe de révolution (Y).
